# EUROPEAN PATENT APPLICATION

(11) **EP 3 296 937 A1**
(43) Date of publication of application: **21.03.2018**
(21) Application number: 16792244.2
(22) Date of filing: 12.05.2016
(51) Int. Cl.: G06Q 10/08, G05B 15/02, B67D 7/08, B67D 7/34

(54) **SYSTEM FOR IDENTIFYING COMPARTMENTS AND DRAINAGE CONTROL IN TANKERS**

(30) Priority: 14.05.2015 ES 201530654
(71) Applicant: Compañía Logística de Hidrocarburos CLH, S.A., 28045 Madrid (ES); Montrel Ingeniería Eléctrica, S.A., 41080 Sevilla (ES)
(72) Inventor: CORTÉS ALAMÁN, Emilio José, 28045 Madrid (ES); DE MORA ESCUDÉ, Benedicto, 41080 Sevilla (ES)
(74) Representative: Escudero Prieto, Nicolás Enrique
(86) International application number: PCT/ES2016/070363
(87) International publication number: WO 2016/181012

(57) **Abstract**

The invention relates to a novel system for identifying compartments (5) and drainage control in a tanker truck (1) parked in a loading/unloading bay (2), wherein said bay (2) is equipped with a plurality of loading/unloading arms (3) and/or drainage hoses (3') for connecting to corresponding coupling flanges (4), where said flanges (4) are connected to the compartments (5) of the tank (6) of the truck (1). The system preferably comprises: a plurality of passive identifiers (7) connected to the coupling flange (4) for the loading and unloading of each compartment (5); and a reader/recorder (8) for reading/recording the information contained in the passive identifiers (7), installed in the structure of the loading bay (2) and connected to the coupling of the loading/unloading arms (3) and/or the drainage hoses (3').

## Description

### FIELD OF THE INVENTION

The present invention is comprised in the field of logistics relating to hydrocarbons and different classes of petroleum products. More specifically, the invention relates to a system for identifying compartments of tanker trucks during their loading and unloading operations, as well as for controlling drainage operations in said compartments.

### BACKGROUND OF THE INVENTION

National systems for storing and transporting petroleum products today are essentially based on widespread networks of made up of pipelines spanning thousands of kilometers, connecting different storage and supply points. Spain, for example, has a network of over 4,000 kilometers of pipelines, 38 nodes made up of storage facilities with a 7.8 million cubic meter capacity which are available for petroleum operators working in the country through a large number of distribution points. These dimensions offer up an idea of the complexity involved in controlling the circulation of petroleum products over transport networks, which requires suitable and precise monitoring to prevent losses of efficiency, material losses and possible environmental damage, for example, in the case of products leaking into the surrounding area.

Within the logistics associated with hydrocarbon transport, the loading points of tanker vehicles (conventionally trucks), which are in charge of distributing fuels from centralized plants in the hydrocarbon network to the commercial stations of the different operators of said network, are particularly important. In the mentioned plant loading points, it is necessary to perform suitable control over the trucks and their respective compartments, registering at all times information relating to the identification of the trucks, the products and the load amounts, the operative requirements of logistics companies and operators thereby being adapted accordingly.

For this purpose, the state of the art discloses several electronic sealing systems for tanks (commonly known in Spanish by its abbreviation SECC), such as the system developed by the company CEPSA, for example. Said systems comprise control means for controlling the elements of the tanks (for example through sensors to monitor the state of the filling or discharge valves) and the vehicle fleets operating in the plants. This thereby allows controlling the different processes for loading, transporting and unloading the product, generating information about the state of the compartments of the trucks.

Although the mentioned systems provide some breakthroughs compared with earlier techniques for controlling the loading/unloading of tanker trucks, said systems still have serious limitations to be resolved. Said limitations primarily relate to control over tank drainage, compartment assignment errors and supervision of the amounts programmed for each compartment.

In known systems, identification of the compartments is supported by manual data entry by the drivers at the time the loads are programmed, where it is the drivers who key in the deposit number to which the loading arm is connected. This information can later be found in the documentation generated by the system and in the entire chain of information associated with the load. Nevertheless, this method of identification has a high probability of error, which causes an important impact on the suitable control of the loading processes both in terms of management and in terms of human resources. In this context, it would be desirable to assure that the information, relating to the compartments involved, made available to the control systems controlling the loads of the tanks is correctly registered.

Likewise, another consequence of the control of the drainage being performed erroneously is the existence of product overfilling, overflowing and spilling in the loading bay. This makes it necessary to prevent, on one hand, loading the compartments if they were not previously drained, and on the other hand, preventing the predetermination of amounts exceeding the maximum load capacity of each compartment.

To solve the problems and limitations of the state of the art, the present invention proposes a novel system for identifying compartments and drainage control in tanker trucks.

### BRIEF DESCRIPTION OF THE INVENTION

According to the information proposed in the preceding section, an object of the present invention is to obtain means that allow more precise control over the loading of fuel in different tanks, furthermore preventing overflowing and human errors, which allow saving in costs and reliably identifying the loaded products in delivery notes as a result of the precise and automatable control of compartments in tanker trucks.

This object is preferably obtained by means of a system for identifying compartments and drainage control in a tanker truck parked in a loading/unloading bay, wherein said bay is equipped with a plurality of loading/unloading arms and/or drainage hoses or arms, for connecting to coupling flanges connected to the compartments of the tank of the truck, and wherein said system advantageously comprises:
- a plurality of passive identifiers connected to the coupling flange for the loading and unloading of each compartment; and
- a reader/recorder for reading/recording the information contained in the passive identifiers, installed in the structure of the loading bay and connected to the coupling of the loading/unloading arms and/or the drainage hoses.

In a preferred embodiment of the invention, each identifier has a unique internal code which can be accessed for the reading thereof, and a memory module for writing and reading data. Each identifier more preferably comprises a current loop transmitter/receiver, configured for reading and registering data.

In another preferred embodiment of the invention, the reader/recorder comprises means of communicating with the transmitter/receiver of the identifier, capturing the code thereof and being able to write therein the data associated with the loads.

In another preferred embodiment of the invention, the system comprises a network communicated control subsystem implemented by means of hardware/software. More preferably, said control subsystem comprises a drainage monitor installed in the loading bay, connected to the control subsystem and configured to indicate the drainage state of each compartment. Said monitor also comprises a plurality of visual indicators to indicate whether or not a given compartment has been drained.

In a preferred embodiment of the invention, the control subsystem has a CPU to manage the drainage process and to manage the processes of reading/writing the identifiers of the tank. More preferably, the CPU is linked to a remote server through an RS-232 serial connection converted to a fiber optic Ethernet connection.

In a preferred embodiment of the invention, the reader/recorder is connected to the CPU through a CAN-BUS type connection for reading the identifiers, and through an RS-232 type connection for writing the identifiers.

In a preferred embodiment of the invention, the control subsystem comprises a detection module for detecting the presence of liquid in the drainage hose and/or the open or closed position of the valve of said hose through sensors integrated in the actual coupling to the flange for loading/unloading. More preferably, the subsystem comprises a CAN-BUS type connection to the interface devices of the sensors for the exchange of information in said control subsystem.

### DESCRIPTION OF THE DRAWINGS

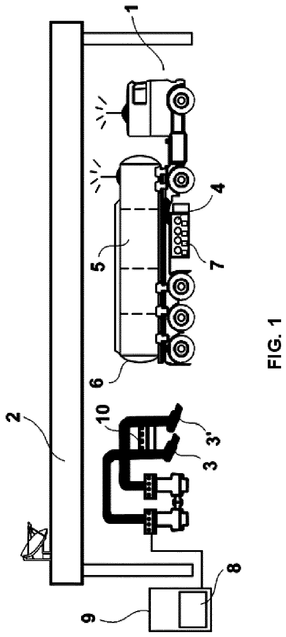

Figure 1 of the present document shows a schematic view of the system of the invention, in which a tanker truck parked in a loading bay, as well as the main elements that are part of said system and its control subsystem are depicted.

### - Description of the reference numbers of Figure 1:

(1) Tanker truck
(2) Loading bay
(3) Loading arms
(4) Coupling flanges for loading/unloading
(5) Fuel compartments
(6) Tank
(7) Passive identifiers
(8) Reader/recorder of the loading bay
(9) Control subsystem
(10) Drainage monitor

### DETAILED DESCRIPTION OF THE INVENTION

A detailed description of the invention is provided below in reference to a preferred embodiment thereof based on Figure 1 of the present document. Said embodiment is provided for non-limiting illustrative purposes and may be applied to other preferred embodiments.

Figure 1 shows a profile view of a tanker truck (1) parked in a loading bay (2), wherein said bay (2) is equipped with a plurality of loading arms (3) and/or drainage hoses (3') for connecting to a plurality of corresponding coupling flanges (4) installed in the truck (1), where said flanges (4) are connected to the compartments (5) of the tank (6) of said truck (1).

To suitably monitor the loading and unloading processes, the system of the invention incorporates at least two essential components:
- A plurality of passive identifiers (7) (generically referred to as "TAGs") associated with each compartment (5) of the tank (6) and connected to the coupling flange (4) for loading and unloading. Each identifier (7) comprises a current loop transmitter/receiver, configured for reading and registering data. Preferably, each identifier (7) has a recorded, unique internal code which can be accessed for reading thereof. A one-to-one correspondence is thereby established between said identifier (7) and the compartment (5). Furthermore, the identifier has an area with available memory allowing the user to write data.
- A reader/recorder (8) installed in the structure of the loading bay (2) and connected to the coupling of the loading arm (3) and/or the drainage hose (3'), the latter elements in turn being connected to the flange (4) for the loading/unloading of the truck (1). Said reader/recorder (8) is configured for being communicated with the transmitter/receiver of the identifier (7) by capturing the code thereof and being able to write therein the data associated with the loads, providing a remote network control subsystem (9) (said control system (9) is conventionally implemented by means of hardware/software). The data written in the identifier (7) conventionally consists of: loading date and time, load identification document number, product code, product description, amount loaded at temperature, net amount loaded, density, temperature, additive load, description of the additive, amount of additive, mixture percentage, amount at temperature of the first and second component of the mixture, etc.

When the system performs readings of the identifiers (7) through the reading-recording equipment (8), the data to be received in the communication frames include, on one hand, non-erasable fixed data associated with each identifier (7) that allows the unequivocal association of the compartments (5) of the tanks (6) with the identifier (7) in order to assign in databases of the control subsystem (9) the one-to-one correspondence of the identifier (7) with the compartment (5), and additionally the data recorded in the identifiers (7) in previous loading operations. Therefore before initiating a new load in said control subsystem (9), information about the previous loading operation performed by that tank (6) can be collected, and once the current loading operation has ended, the data of this loading operation can be recorded in the identifier (7).

When the loading arm (3) is coupled to the opening of the compartment (5) when loading is initiated, the reader/recorder (8), which is connected to the read/write channel associated with the arm (3), reads the code of the identifier (7) associated with the compartment (5), establishing a unique relationship of the loading point with the compartment (5) to which it is connected, and accordingly, providing the secure identification of said compartment (5) for the loading control subsystem (9). Preferably, the interaction between the reader/recorder (8) of the loading bay and the identifier (7) installed in the truck is performed by means of an electrical connection (for example by current loop) using the flange connecting the loading arm (3) and the compartment (5) as an intermediate conductive element. Said interaction is performed similarly with a drainage hose or arm (3').

Once the compartment (5) has been securely identified and with a database containing the capacities of the various compartments (5) in the control subsystem (9), it is possible to supervise loading schedules to prevent pre-determining loads that may involve an overflowing of the tanks (6).

Another preferred application of the system is the control of the drainage operations of the compartments (5). In connection with this function, to assure its being carried out, prior to the loading authorization, the reading of the identifiers (7) associated with a drainage coupling that is mechanically connected to the drainage circuit of the loading bay (2) by means of a hose (3') must be available, such that the connection of the coupling and the subsequent draining of each compartment (5) of the tank (6) is identified and registered before the loading authorization. As mentioned, this drainage coupling requires using a liquid detector and another detector for sensing the open and closed positioning of the coupling to the flange (4) for loading the compartment (5), such that it is assured that after the opening thereof, a given time without the presence of liquids has passed before the closure thereof so as to enable the subsequent loading thereof.

The system of the invention also preferably comprises a drainage monitor (10) installed in the loading bay (2), connected to the control subsystem (9) and configured to indicate the drainage state of each compartment (5). Said monitor (10) preferably comprises a plurality of visual indicators (for example, light indicators) to indicate whether or not a given compartment (5) has been drained prior to the loading thereof. When a tanker truck (1) reaches the loading bay (2) after it has been authorized, the drainage arm (3') is connected and each of the compartments (5) is drained one after the other.

Through the reading/recording equipment (8), the control subsystem (9) periodically requests the state of the compartment (5) until it has been completely drained. When this occurs, the drainage monitor (10) reports this situation by indicating it both on a display installed for that purpose in the bay (2), and with a rapidly blinking green light signal, for example.

When the control subsystem (9) considers that the compartment (5) is drained, depending on its own controls and fields of its database, it sends an order to switch to the completed drained state of the compartment (5). At that time, the corresponding steady green pilot light on the monitor (10) is activated, indicating that the draining of this compartment (5) has been completed and that the draining of the next one can be performed. Once all the compartments (5) are drained, i.e., they all display steady green pilot lights, loading in the bay (2) commences following the conventional method.

The control subsystem is informed at all times of the serial number of each identifier (7) in each compartment (5), while the loading arm (3) remains connected to the tank (6), so product contaminations and overfilling will therefore be prevented. When the loading process ends and the control subsystem (9) determines it to be appropriate, all the drainage states are restarted and all the pilot lights are shut off.

The control subsystem (9) of each bay (2) preferably has a CPU to manage the drainage process and to manage the processes of reading/writing the identifiers (7) of the tank (5) at a low level. This CPU is linked to a remote server, for example through an RS-232 serial connection, which is converted to a fiber optic Ethernet connection.

Another component of the control subsystem (9) is a module reporting whether there is the presence of liquid in the drainage arm (3') and the open or closed position of the valve thereof through two sensors integrated in the actual coupling to the flange (4) for loading/unloading. Said sensors comprise a liquid sensor, which detects moisture and is located inside the coupling, and another sensor associated with the opening valve of the coupling. This information is sent in the form of discrete signals to one or more interface devices of the control subsystem (9), and from there to the CPU through a CAN-BUS type connection, for example.

As mentioned above, each reading/recording module (8) is in charge of reading the information of each of the identifiers (7) located in the openings (3) for loading/unloading the tank (6) and for registering relevant data therein. This module (8) is linked, preferably by means of a CAN-BUS type connection, to the CPU for reading the identifiers (7), and through an RS-232 type connection converted to optical fiber Ethernet connection, it is linked to a remote server for writing.

Introducing the compartment identification system of the invention in tanker trucks (1) allows the development of a number of functions.

First, the system allows having drainage control over the compartments (5), giving rise to the option of obtaining identifications of the compartments (5) of each tank (6) by means of the control subsystem (9). Furthermore, together with additional instruments in the coupling of the drainage hose (3') (conventionally a liquid detector and a detector for sensing the opened and closed positioning of the valve for coupling to the flange (4)), the system allows establishing the initial supervision of the draining of the compartments (5) as a condition prior to commencing the loading, thereby assuring the cleanliness and the emptying of the compartment (5) and the loading capacity thereof by controlling both automatically.

Additionally, the system allows a control of the amount prior to loading. The compartments (5) of the tanks (6) will thereby be correctly identified, and the values of the actual capacities thereof will be obtained, so it is therefore possible to verify that the amounts previously determined by the drivers are suitable before loading starts. Overfilling and spilling in the loading bay are thereby prevented.

The system also allows suitably assigning the products to the compartments (5), because since their identification is correct, the loading control subsystem (9) has actual information about the products loaded in each compartment (5), reducing human scheduling errors made by the drivers of the trucks (1).

By allowing the recording of the data of the loads in the identifier (7), possible incompatibilities of product loads between successive loads can be established and controlled for each compartment (5), since the data of the load, such as the product, amount, additive, etc., can be written upon completion in each compartment (5). Furthermore, information of the identifier (7) of the compartment (5) will be constantly available, and while the loading arm (3) is connected, the system allows establishing an additional control over the load flow.

Furthermore, the system also allows the correct identification of products in delivery notes: by controlling the identification of the compartment (5) with the loading arms (3), it can be assured on one hand that the reflected information about the loaded product for each compartment (5) is the actual information, and on the other hand that the information available in the control subsystem (9) is correct.

Implementing this system may also make it easier to develop new functions at the unloading points in order to prevent contaminations and overfilling of unloading tanks by equipping installations of this type with the corresponding means.

On one hand, since the passive identifier (7) associated with each compartment (5) can be read at the destination, the product contained therein can be known with certainty, and by equipping the coupling of the unloading hose with an opening interlock device, initiation of the unloading could be prevented if the compartment (5) to which the hose is connected does not contain the same product.

On the other hand, if there are instruments in the receiving tanks that report on the empty space available by reading the identifiers (7) of the tank (5), it would be possible to know prior to initiating the unloading whether or not said unloading is possible in its entirety and to take precautions where appropriate.

Additionally, the feature that the identifiers (7) allow the writing can enable new ways to transfer data about the product, additives, etc. between the systems of the loading bay (2) and the systems of the destination stations.

For communication between the control subsystem (9) of the plant and the reading/recording equipment (8), a communication protocol is designed such that a correct identification of the compartments (5) of the tanks (6) that are connected to the loading arms (3) is allowed.

## Claims

1. A system for identifying compartments (5) and drainage control in a tanker truck (1) parked in a loading/unloading bay (2), wherein said bay (2) is equipped with a plurality of loading/unloading arms (3) and/or drainage hoses or arms (3') for connecting to corresponding coupling flanges (4), where said flanges (4) are connected to the compartments (5) of the tank (6) of the truck (1), and
said system is **characterized in that** it comprises:
- at least a plurality of passive identifiers (7) connected to the coupling flange (4) for the loading and unloading of each compartment (5);
- at least one reader/recorder (8) for reading/recording the information contained in the passive identifiers (7), installed in the structure of the loading/unloading bay (2) and connected to the coupling of the loading/unloading arms (3) and/or the drainage hoses or arms (3').

2. The system according to the preceding claim, wherein each identifier (7) has a unique internal code which can be accessed for the reading thereof, and a memory module for writing data.

3. The system according to any of the preceding claims, wherein each identifier (7) comprises a current loop transmitter/receiver configured for reading and writing data.

4. The system according to the preceding claim, wherein the reader/recorder (8) comprises means of communicating with the transmitter/receiver of the identifier (7), configured for capturing the code thereof and writing therein the data associated with the loads.

5. The system according to any of the preceding claims, comprising a network communicated control subsystem (9) implemented by means of hardware/software.

6. The system according to the preceding claim, comprising a drainage monitor (10) installed in the loading bay (2), connected to the control subsystem (9) and configured to indicate the drainage state of each compartment (5).

7. The system according to the preceding claim, wherein said monitor (10) comprises a plurality of visual indicators to indicate whether or not a given compartment (5) has been drained.

8. The system according to any of claims 5 to 7, wherein the control subsystem (9) has a CPU to manage the drainage process and to manage the processes of reading/writing the identifiers (7) of the tank (5).

9. The system according to the preceding claim, wherein the CPU is linked to a remote server through an RS-232 serial connection converted to a fiber optic Ethernet connection.

10. The system according to any of claims 8 to 9, wherein the reader/recorder (8) is connected to the CPU through a CAN-BUS type connection for reading the identifiers (7), and through an RS-232 type connection for writing the identifiers (7).

11. The system according to any of claims 5 to 10, wherein the control subsystem (9) comprises a detection module for detecting the presence of liquid in the drainage hose (3') and/or the open or closed position of the valve of said hose through sensors integrated in the actual coupling to the flange (4) for loading/unloading.

12. The system according to the preceding claim, comprising a CAN-BUS type connection to the interface devices of the sensors for the exchange of information in the control subsystem (9).
